# FASCICULE DE BREVET EUROPEEN

(11) **EP 2 481 117 B1**
(45) Date de publication et mention de la délivrance du brevet: **20.02.2019**
(21) Numéro de dépôt: 10757598.7
(22) Date de dépôt: 24.09.2010
(51) Int. Cl.: H01M 8/0444, G01N 25/18, C25B 1/10, C25B 15/02, H01M 8/2483, H01M 8/04492

(54) **RÉACTEUR ÉLECTROCHIMIQUE,TEL QU'UNE PILE A COMBUSTIBLE OU UN ÉLECTROLYSEUR, ÉQUIPÉ D'UN DISPOSITIF DE MESURE D'UN PARAMÈTRE D'UN GAZ SPÉCIFIQUE DE L'OPÉRATION DUDIT RÉACTEUR**
ELEKTROCHEMISCHER REAKTOR WIE ETWA EINE BRENNSTOFFZELLE ODER EIN ELEKTROLYSATOR MIT EINER VORRICHTUNG ZUR MESSUNG EINES FÜR DEN BETRIEB DES REAKTORS SPEZIFISCHEN GASPARAMETERS
ELECTROCHEMICAL REACTOR, SUCH AS A FUEL CELL OR AN ELECTROLYZER, PROVIDED WITH A DEVICE FOR MEASURING A PARAMETER OF A GAS SPECIFIC TO THE OPERATION OF SAID REACTOR

(30) Priorité: 25.09.2009 FR 0904594
(43) Date de publication de la demande: 01.08.2012
(73) Titulaire: Compagnie Générale des Etablissements Michelin, 63000 Clermont-Ferrand (FR)
(72) Inventeur: PAGANELLI, Gino, CH-1782 Belfaux (CH)
(74) Mandataire: Roussy, Delphine
(86) Numéro de dépôt international: PCT/EP2010/064109
(87) Numéro de publication internationale: WO 2011/036236

(56) Documents cités:
- CA-A1- 2 655 605
- JP-A- 8 184 576
- JP-A- 2008 191 019
- US-A1- 2002 110 713
- US-A1- 2003 059 656
- US-A1- 2004 247 984
- US-A1- 2005 228 596
- US-A1- 2005 282 060
- US-A1- 2009 061 261
- US-B1- 6 461 751

## Description

### DOMAINE DE L'INVENTION

La présente invention concerne les réacteurs électrochimiques tels que les piles à combustible ou les électrolyseurs. Plus particulièrement, elle vise les dispositifs permettant d'opérer des mesures en vue du suivi de l'état de ces équipements et de leur conduite opérationnelle.

### ETAT DE LA TECHNIQUE

Les réacteurs électrochimiques font l'objet à l'heure actuelle de nombreuses études dans le cadre des efforts déployés pour limiter la pollution de l'environnement, dans les transports notamment. Parmi les plus étudiés actuellement figurent sans doute les générateurs électrolytiques à combustible hydrogène, utilisant comme comburant de l'air ou de l'oxygène pur. L'utilisation d'électrolytes solides sous la forme de membranes polymères imprégnées d'eau a permis des progrès considérables. On assiste également en contrepoint au développement d'électrolyseurs, notamment pour effectuer des stockages d'énergie électrique sous forme d'énergie chimique. Les réalisations actuelles permettent d'envisager des piles à combustible et des électrolyseurs fonctionnant avec de bons rendements dans d'excellentes conditions de sécurité.

Des améliorations restent à réaliser sur le plan économique en raison du coût élevé de certains matériaux nécessaires (catalyseurs par exemple) et des difficultés rencontrées pour atteindre des conditions de fonctionnement optimales et les maintenir dans la durée. Une de ces difficultés réside dans le fait que les systèmes actuels ne permettent pas de bien connaître les conditions de fonctionnement interne du réacteur, faute de disposer de toutes les mesures qui pourraient s'avérer nécessaires ou utiles au-delà de la température et de la pression des gaz qui doivent être mesurées de toute façon avec précision. Pour la pile à combustible, on a donc été obligé traditionnellement d'assurer à l'avance une qualité rigoureuse, notamment en termes de pureté, de l'hydrogène utilisé pour alimenter la pile à combustible. Malgré ces précautions on est obligé de faire fonctionner la pile ensuite en quelque sorte "en aveugle" en ce qui concerne la pureté de l'hydrogène effectivement utilisé par la pile.

Par ailleurs la pile à combustible est encore aujourd'hui largement un dispositif au stade expérimental. De nombreuses études sont encore en cours qui pourrait bénéficier d'un moyen permettant de mieux connaître et comprendre le fonctionnement des réacteurs et de leurs divers composants, si possible en temps réel, sans interférer avec le fonctionnement du système étudié. Or on continue d'utiliser dans la plupart des installations d'électrolyse industrielle, ou en laboratoire, des analyseurs de gaz pour fournir les informations concernant la composition des gaz en présence dans le réacteur électrochimique au cours de son fonctionnement. De fait, ces analyseurs fonctionnement par prélèvements, intermittents ou continus, d'échantillons de gaz produits par l'électrolyseur ou consommés par la pile à combustible. Les échantillons prélevés sont dirigés vers un analyseur qui procure l'information recherchée sur la concentration d'un ou plusieurs gaz produits par l'électrolyseur. Les échantillons ainsi prélevés dans le réacteur sont ensuite rejetés, ce qui représente une perte de rendement.

On a vu se développer ces dernières années des propositions pour utiliser notamment à des fins de surveillance des capteurs de concentration de gaz par mesure, notamment d'hydrogène, dans des gaz de l'environnement des piles à combustible, qui reposent sur une mesure la conductivité thermique à l'aide d'une unité sensible comportant une résistance chauffante dont l'échauffement ou le refroidissement dissipatif est fonction de la conductibilité thermique du gaz ambiant et donc en général de sa composition. Ces capteurs relativement peu encombrants et simples à mettre en oeuvre sont particulièrement bien adaptés aux mesures de la teneur d'un gaz en hydrogène en raison de la très forte conductibilité thermique de ce dernier gaz par rapport à celle de la plupart des gaz usuels auxquels il est susceptible d'être mélangé.

Ainsi, la demande US2003/0059656 décrit un empilement de piles à combustible avec un capteur de concentration d'hydrogène installé au niveau d'une plaque système de l'empilement. La demande de brevet publiée sous le N° US 2005/0228596 décrit également l'emploi d'un capteur sensible à la concentration d'hydrogène dans l'environnement d'un système de pile à combustible pour un véhicule automobile grâce à une mesure de conductivité du milieu gazeux concerné qui peut contenir outre l'hydrogène diverses impuretés en provenance de l'air ou une quantité plus ou moins importante d'humidité. Le document décrit une technique propre à fournir une mesure débarrassée des erreurs qui peuvent être causées par la présence d'humidité ou d'autres impuretés dans le mélange de gaz surveillé, malgré le caractère non linéaire des relations liant les différents paramètres qui affectent la conductivité d'un mélange à base d'hydrogène dans certains cas de figure. Parmi les mesures prises, il décrit notamment l'utilisation de moyens pour protéger l'élément sensible du capteur de gaz contre l'humidité, par exemple en ménageant un trajet sinueux ou formant chicane sur la communication entre le gaz à surveiller et l'élément sensible, ou en recouvrant l'élément sensible avec un revêtement protecteur par exemple à base de silice. Les mesures sont de préférence effectuées en divers points sensibles du système de pile et même, au-delà, du véhicule équipé d'une telle pile. Une alarme est déclenchée lorsque les mesures attestent l'existence d'un danger pour la sécurité et l'alimentation de la pile en hydrogène peut alors être interrompe. Toutefois le système décrit ne comporte pas de disposition propre à permettre un suivi ou un contrôle effectif des conditions de fonctionnement de la pile.

La demande de brevet japonais publiée sous le N° JP2008191019 explique comment on peut faire fonctionner un capteur de concentration basé sur la mesure de conductivité en le disposant à l'écart de la conduite où circule le gaz à surveiller disposant plusieurs enceintes sur le trajet de communication entre cette conduite et l'élément sensible pour freiner la propagation des impuretés et notamment de la vapeur d'eau susceptibles de fausser la mesure et d'altérer le capteur. Le capteur est installé sur la ligne de décharge d'hydrogène d'une pile à combustible non représentée. Des dispositions sont proposées pour éviter que la vapeur d'eau nécessairement contenue dans le gaz hydrogène déchargé n'entre en contact avec l'élément sensible du capteur, en particulier avec l'utilisation d'un filtre hydrofuge en tétrafluoréthylène et d'une vanne de fermeture commandée au moyen d'un vis sans fin motorisée qui permet d'isoler l'enceinte où se trouve le capteur de la conduite où circule le gaz à surveiller. Ce montage permet sans doute d'obtenir certaines informations sur la teneur du mélange hydrogène dans le circuit de décharge, en limitant influence de l'humidité sur la mesure. Il ne parait pas cependant que les dispositions décrites soient appropriées à la réalisation d'un suivi ou d'un contrôle précis et rapide des conditions de fonctionnement d'une telle pile.

Plus récemment, la demande de brevet publiée US 2009/00611261, par exemple, décrit l'utilisation d'un dispositif de détection d'un paramètre physique d'un gaz s'écoulant dans une conduite, dans lequel un élément de détection placé dans une chambre est séparé de l'intérieur de ladite conduite par un filtre d'un matériau à base de fibres qui empêche la formation sur l'élément de détection d'un dépôt ou d'un film d'eau liquide. Le filtre et le traitement des parois de la chambre empêchent que la présence d'eau liquide ou de vapeur d'eau dans le gaz s'écoulant dans la conduite ne fausse les indications de cet élément dans la dite chambre. Dans un exemple considéré l'élément de détection comprend une résistance électrique chauffante dont la température de chauffage peut varier en fonction de la concentration d'un gaz dans son environnement. Le dispositif de détection peut être utilisé pour détecter la concentration en hydrogène d'un gaz à contrôler, y compris dans le cas où la concentration en hydrogène est élevée ou en présence de vapeur d'eau. Dans un exemple, le document décrit un système de pile à combustible pour fournir une énergie motrice à un véhicule, qui comporte un empilage de cellules électrochimiques alimentées en gaz hydrogène d'une part et en gaz riche en oxygène, de l'air par exemple, d'autre part. A la sortie de l'empilage de cellules, le circuit hydrogène comprend une conduite de sortie du gaz hydrogène non consommé dans la pile. Une pompe permet de recirculer le débit d'hydrogène récupéré dans la dite conduite de sortie vers l'entrée hydrogène de l'empilage. Ce débit vient s'ajouter à un débit de gaz d'hydrogène frais issu d'un réservoir sous pression et l'ensemble est admis à l'entrée de l'empilage de cellules. La conduite de sortie de gaz hydrogène est égaiement connectée sélectivement à l'extérieur du système par une vanne de purge qui permet d'évacuer par tout ou rien une partie de l'hydrogène récupéré à la sortie de l'empilage. Selon le document, un tel dispositif de détection de la concentration en hydrogène, tel que décrit auparavant, est disposé de préférence dans la conduite de sortie d'hydrogène à l'extérieur de l'empilage pour commander une vanne de régulation de la pression d'alimentation du gaz issu du réservoir d'hydrogène ainsi que la vanne de purge en fonction de la concentration détectée. Selon le document, le dispositif de détection peut également être disposé en aval de la pompe de recirculation ou même en aval de la vanne de régulation de pression. Cependant selon ce document la première disposition mentionnée, à savoir en amont de la pompe de recirculation, est préférée car les mesures de concentration sont moins entachées d'erreur à cet endroit. D'autres architectures de système de piles à combustible sont également décrites avec diverses dispositions d'un ou plusieurs dispositifs de détection de la concentration gazeuse dans les circuit de gaz hydrogène ou oxygène.

Le système de pile à combustible ainsi décrit dans cet exemple présente l'intérêt de permettre des informations sur le comportement ou le fonctionnement de la pile à combustible, sans nécessiter de prélever des échantillons de mélange gazeux dans les circuits de la pile pour les envoyer en dehors du système en vue de les analyser. Il permet d'utiliser ces informations pour agir sur des organes de commande agissant sur son fonctionnement comme la pression d'admission de l'hydrogène frais à l'entrée de la pile et l'ouverture de la vanne de purge pour modifier ce comportement ou cette caractéristique de fonctionnement. Ainsi il fournit un moyen d'effectuer un contrôle de la performance de fonctionnement du système.

On pourrait être tenté d'en déduire qu'il réalise un pilotage de la pile elle-même grâce à la connaissance en temps réel qu'il pourrait permettre d'obtenir sur la concentration interne d'hydrogène en vue d'optimiser en permanence le fonctionnement de la pile. La pratique montre cependant que tel n'est pas le cas en raison du caractère encore très approximatif des informations qui peuvent être obtenues avec les dispositions qui viennent d'être évoquées. Le demandeur a constaté en effet que pour réaliser de cette manière un pilotage optimisé d'un réacteur électrochimique les paramètres caractéristiques nécessaires doivent être mesurés dans des conditions de sensibilité, de précision et de temps de réponse qui ne sont pas à la portée des systèmes proposés précédemment. De fait, il serait souhaitable de pouvoir réaliser une exploitation plus complète d'informations délivrées par un capteur de d'hydrogène pour optimiser la conduite et le suivi d'un réacteur électrochimique.

Ainsi des progrès restent à faire pour améliorer la connaissance du fonctionnement des réacteurs électrochimiques, tels que les piles à combustible et les électrolyseurs, par des mesures capable d'informer simplement, fréquemment, rapidement et avec précision l'opérateur sur des facteurs clés de la marche des systèmes de réacteurs électrochimiques et lui permettre ainsi d'agir efficacement et de préférence automatiquement pour maintenir le rendement, l'efficacité, la sécurité et la longévité de ces systèmes.

### EXPOSE DE L'INVENTION

Face à ces besoins, la présente invention vise à fournir un nouveau réacteur électrochimique, notamment pour une pile à combustible ou un électrolyseur, propre à fournir des informations sur des caractéristiques de son fonctionnement interne, et à permettre, notamment, d'effectuer un suivi opérationnel et le contrôle de ce fonctionnement.

L'invention a pour objet un réacteur électrochimique, tel qu'une pile à combustible ou un électrolyseur, qui comporte: un empilage de cellules électrochimiques dont chacune comprend au moins une plaque d'électrode possédant une face en contact électrique avec un électrolyte; au moins une tubulure reliée à ladite face de chacune des cellules dans un circuit d'échange d'un gaz avec l'extérieur de l'empilage; un capteur sensible à la composition dudit gaz dans le circuit; et au moins un moyen de suivi d'une condition fonctionnement du réacteur, par exemple pour le contrôle de la concentration d'un gaz, en fonction de l'information délivrée par ledit capteur. Conformément à l'invention, ce réacteur est caractérisé en ce que l'empilage de cellules et la dite tubulure forment un corps de réacteur monobloc qui comporte au moins une chambre intégrée dans ce corps en communication avec ladite tubulure et en ce que ledit capteur de composition du gaz est monté dans le dit corps monobloc et comprend une unité sensible exposée directement à la concentration in situ d'un composant dudit gaz dans la dite chambre .

Grâce à cette disposition, un capteur de la concentration d'un gaz mis en oeuvre dans les cellules électrochimiques du réacteur, notamment un capteur de la concentration d'hydrogène dans le circuit relié à l'anode des cellules électrochimiques du réacteur, dans une pile à combustible, ou à la cathode de celles-ci, dans un électrolyseur, se trouve intimement associé aux conditions de réaction desdites cellules électrochimiques et cela par exemple en termes de température, conditions d'humidité et composition du gaz mis en jeu dans l'empilage de cellules de réaction. En outre, du fait de son montage dans une chambre qui est directement intégrée dans le corps formé par le bloc de cellules et la tubulure qui assure les échanges de gaz entre ces cellules et la dite chambre, la vitesse du gaz qui fait l'objet de la mesure est relativement basse et proche de celle qu'il adopte dans les cellules. Ceci est favorable à la précision de la mesure. La proximité du capteur avec l'empilage où se déroule la réaction est en outre un facteur bénéfique pour abréger le temps de réponse.

Selon l'invention, ladite chambre est formée dans une plaque système qui présente une première face, accolée à une cellule d'extrémité dudit empilage, dans laquelle ladite tubulure débouche en sortant de l'empilage de cellules qu'elle traverse, et une deuxième face opposée à la première qui forme un support pour la fixation d'un ou plusieurs éléments dudit circuit de gaz à l'extérieur dudit corps. Ainsi les parties du circuit de gaz extérieures par rapport au corps monobloc peuvent être reliées avec la chambre intégrée à travers cette deuxième face de la plaque système à laquelle sont également fixés des organes de commande permettant d'assurer et de gérer la circulation dudit gaz.

L'ensemble forme ainsi un ensemble compact au coeur duquel est intégré le capteur de composition du gaz dont la température reste homogène à celle qui règne à l'intérieur de l'empilage de cellules. Ceci constitue un facteur qui réduit en soi les risques de condensation de l'humidité de l'air dans l'environnement immédiat de l'unité sensible du capteur, dont on verra qu'elle peut être nuisible à divers égards. Ce facteur permet d'éviter au moins en partie un recours à des dispositions élaborées évoquées dans l'état de la technique cité pour éliminer les condensas. Par ailleurs, la vitesse de circulation du gaz qui traverse la chambre intégrée entre l'extérieur du circuit et la tubulure qui dessert les cellules est plus faible que dans d'autres parties du circuit de gaz. Ce facteur est favorable à la précision de mesure du capteur. La proximité immédiate contribue en outre à la brièveté de son temps de réponse à des changements de composition dans le mélange.

Dans un telle réalisation, il est opportun de monter ledit capteur de composition dans une paroi, latérale notamment, de ladite plaque système entre lesdites première et deuxième faces. On prévoit que ce capteur comporte du côté interne de ladite paroi un embout creux enfermant une cavité qui est en contact direct avec l'atmosphère de ladite chambre et dans laquelle est logée ladite unité sensible à la concentration in situ d'un composant du gaz dans la chambre. Selon l'invention, la cavité logeant l'unité sensible dans ledit embout creux est séparée par un cloisonnement étanche aux gaz et aux liquides d'une autre chambre, formée dans une partie du capteur montée du côté externe de ladite paroi par rapport à la dite chambre, dans laquelle sont montés des circuits d'une unité de traitement des signaux transmis par l'unité sensible. Avec cette disposition, on prévoit que ladite cloison soit traversée, de façon étanche et résistant à une pression différentielle entre la cavité et l'autre chambre dudit capteur, par des conducteurs issus de l'unité sensible. Ainsi se trouve écarté tout risque de fuite d'hydrogène à l'extérieur du corps de réacteur monobloc par l'intermédiaire du montage du capteur et, notamment, dans la zone où se trouvent rassemblées les connexions électriques du capteur. D'autre part, l'unité de traitement est ainsi localisée à proximité immédiate de l'unité sensible montée dans le corps monobloc. On appréciera que la perturbation des signaux qui sont issus de la première puisse être ainsi très réduite du fait de la proximité de ces deux unités. La précision du système s'en trouve donc encore améliorée.

Selon un aspect préféré pour la réalisation de l'invention, le capteur de concentration de gaz dans ledit circuit est un capteur propre à fournir un signal en fonction des variations de la conductivité thermique du mélange gazeux dans lequel il est plongé. On a constaté en effet que ce type de capteur était bien adapté pour être mis en oeuvre directement à l'intérieur du réacteur et qu'il était particulièrement indiqué pour fournir avec un bon temps de réponse des mesures de la concentration de gaz dans des mélanges fréquents dans ce type de réacteurs.

Selon une technologie, un capteur sensible aux variations de la conductivité thermique du gaz comprend un support doté notamment d'un moyen de chauffage dans des conditions contrôlées et d'un moyen de suivre la température de ce support. En régime stable, cette température est fonction à la fois de l'apport de calories de la part du moyen de chauffage et de la dissipation de chaleur du support dans son milieu ambiant. La dissipation calorifique est elle-même fonction, d'une part, de l'écart entre la température du support et celle du milieu ambiant et, d'autre part, de la conductivité thermique du mélange de gaz ambiant. Cette dernière est elle-même dépendante de la nature de chacun des gaz présents et de leur concentration dans le mélange.

A partir de ces constatations, l'invention vise également la réalisation des mesures de concentration in situ d'un gaz, notamment de l'hydrogène, dans un réacteur électrochimique agencé selon les principes indiqués ci-dessus, non seulement pour la connaissance en soi des phénomènes à l'intérieur d'un réacteur électrochimique à des fins scientifiques, mais aussi comme un moyen de suivi régulier, à partir de l'intérieur du réacteur lui-même, de son fonctionnement et de ses performances. Conformément à un aspect l'invention prévoit d'agir à partir de ces mesures sur différentes commandes opérationnelles de ce réacteur pour alerter, contrôler, optimiser et/ou garantir la sécurité de fonctionnement de celui-ci.

On a vu précédemment que le fonctionnement de nombreux réacteurs électrochimiques s'accompagnait de l'utilisation et/ou de la formation de liquides, notamment d'eau, ce qui peut présenter un problème pour le maintien dans la durée de l'intégrité d'un capteur de concentration basé sur la mesure de la conductivité thermique du mélange gazeux étudié.

Ainsi, selon un aspect de la mise en oeuvre, on utilise, dans un circuit de gaz à l'intérieur d'un réacteur tel que défini précédemment, un capteur de concentration gazeuse possédant une unité sensible aux variations de la conductivité du gaz ambiant, en le positionnant dans un emplacement protégé contre l'entrée en contact de son unité sensible avec les liquides par exemple à l'aide d'un écran hydrofuge. On peut utiliser à cet effet par exemple une membrane microporeuse pour former un écran hydrofuge perméable aux gaz entre l'atmosphère de la chambre intégrée dans le corps monobloc et la surface de l'unité sensible.

Afin de réaliser des mesures précises de la concentration en hydrogène du gaz dans lequel est plongé le capteur in situ, on peut utiliser le fait que ce capteur, ainsi positionné et éventuellement protégé, est sensible aux variations de la conductivité thermique du gaz dans lequel il est plongé, en fonction non seulement de la concentration d'hydrogène dans le circuit gazeux correspondant mais aussi de la concentration de vapeur d'eau dans ledit circuit. Avec un dispositif de commande propre à commander plusieurs mesures de la conductivité dans l'environnement de l'unité sensible à partir de températures d'échauffement différentes on parvient à déterminer la concentration en hydrogène du gaz environnant ce capteur corrigée en fonction de sa teneur en vapeur d'eau.

On peut aussi utiliser un moyen connu de mesure de la teneur en humidité du gaz surveillé. L'unité de traitement des signaux du capteur est susceptible de recevoir également les signaux du capteur d'humidité pour corriger les mesures de concentration fournies par l'unité sensible en fonction de la teneur en humidité détectée dans le mélange. En pratique, le système s'applique non seulement dans un circuit à gaz d'hydrogène avec un capteur sensible à la concentration de ce gaz dans ce circuit, mais également dans un réacteur électrochimique qui comprend un circuit de mélange gazeux à base d'oxygène, soit à l'état pur soit en mélange, notamment dans l'air, pour fournir des indications fonction de la teneur en hydrogène de ce mélange gazeux dans l'environnement du capteur.

Conformément à une application intéressante, le dispositif de mesure de la concentration d'un gaz selon l'invention comporte un dispositif de mesure de la conductivité d'un mélange gazeux dans le réacteur pour déterminer le cas échéant la présence de gaz carbonique ou dioxyde de carbone et sa concentration qui représente parfois une indication importante pour la bonne santé ou l'intégrité de certaines parties du réacteur comme on le verra ultérieurement.

Le réacteur qui vient d'être défini s'applique avec avantage à la réalisation d'une pile à combustible ou d'un électrolyseur perfectionnés. Ainsi par exemple le suivi de la concentration en hydrogène du circuit hydrogène d'une pile à combustible permet de vérifier en marche courante la concentration en hydrogène de gaz admis à l'entrée des cellules électrochimiques d'une pile à combustible. La sortie du capteur fonction de la concentration en hydrogène peut être par exemple exploitée par le dispositif de commande pour actionner par intermittence une vanne de purge afin d'éliminer certaines quantités de gaz mélangé d'impuretés du circuit à gaz hydrogène de façon à maintenir la concentration d'hydrogène dans ce circuit au dessus d'un niveau déterminé.

Par ailleurs, on prévoit avantageusement d'utiliser les indications d'un tel capteur sur la concentration en hydrogène dans le circuit hydrogène pour éviter, pendant la phase d'extinction d'une pile à combustible, que l'environnement des éléments sensibles à l'oxydation n'entre en pénurie d'hydrogène (phénomène connu sous l'étiquette de "H2 starvation"). En outre, ultérieurement, pendant les périodes de repos de la pile où elle ne produit pas d'énergie, on maintient avantageusement le capteur en état de veille, pour détecter si la concentration d'hydrogène dans le circuit de gaz à hydrogène ne tombe pas en dessous d'un seuil, relativement faible, indiquant que l'environnement des éléments sensibles à l'oxydation risque d'entrer en pénurie d'hydrogène. Dans l'affirmative, l'unité de commande active l'admission de quantités d'hydrogène supplémentaires dans le circuit hydrogène pour rétablir la concentration en hydrogène au dessus dudit seuil relativement faible. En pratique, ce seuil correspond à la concentration d'hydrogène nécessaire pour que le potentiel d'anode des cellules électrolytiques de la pile à combustible reste au niveau zéro.

Un capteur de concentration d'hydrogène peut aussi être avantageusement utilisé pour détecter la diffusion d'oxygène dans l'hydrogène en raison d'un défaut de perméabilité entre les deux circuits tel que par exemple un trou dans une membrane polymère utilisée comme électrolyte. Si le circuit d'oxygène est équipé d'un tel capteur, la diffusion d'hydrogène dans l'oxygène peut également être détectée de façon à améliorer la sécurité du système.

Enfin, on a vu que le réacteur selon l'invention peut être équipé d'un capteur adapté à mesurer le taux de gaz carbonique (CO2) dans un mélange dépourvu d'hydrogène. Cette disposition peut être mise en oeuvre dans une pile à combustible dans laquelle on cherche à surveiller, pour des raisons expérimentales ou pour disposer d'une redondance d'information, que les réglages de la pile à combustible sont corrects et que nulle part il ne se crée une condition qui se traduirait par une oxydation intempestive des parties d'une pile qui peuvent être constituées à partir de carbone. Il peut s'agir par exemple du support du catalyseur qui est réalisé à base de graphite pulvérulent.

L'invention vise aussi l'application du réacteur électrochimique défini plus haut à la réalisation d'un électrolyseur dans lequel le circuit de gaz hydrogène comprend une chambre intégrée qui réunit les sorties de gaz de chacune des cathodes des cellules élémentaires d'un empilage de cellules électrolytiques. Un capteur de concentration en hydrogène est monté dans le circuit à hydrogène pour fournir à l'unité de commande au moins un signal fonction de la concentration en hydrogène produit dans ce circuit pour assurer un contrôle du fonctionnement de l'électrolyseur. Bien entendu la même application est faite avec avantage au circuit de production d'oxygène. Les indications recueillies permettent alors de suivre en permanence la pureté des gaz produits et de s'assurer que l'électrolyseur fonctionne dans de bonnes conditions de sécurité. La diffusion d'hydrogène dans l'oxygène, et réciproquement, due à une mauvaise imperméabilité entre les deux circuits, peut par exemple être détectée.

### BREVE DESCRIPTION DES FIGURES

D'autres caractéristiques et avantages de l'invention ressortent de la description faite ci-après en référence aux dessins annexés qui montrent, à titre d'exemples non limitatifs, des formes de réalisation de l'objet de l'invention.
La figure 1 est une vue d'ensemble en perspective d'une pile à combustible équipée de deux capteurs de concentration d'hydrogène.
La figure 2 est une vue en coupe de l'implantation d'un des capteurs de la figure 1 pénétrant dans l'enceinte de la pile à travers la paroi d'une plaque d'extrémité du réacteur électrochimique.
La figure 3 est un schéma synoptique de l'organisation fonctionnelle d'un exemple de dispositif de contrôle de la pile à partir des mesures d'un capteur monté sur l'entrée d'alimentation en hydrogène.
La figure 4 est un schéma très simplifié de la réalisation d'un capteur de concentration d'hydrogène d'un mélange gazeux avec son électronique de traitement pour un réacteur électrochimique, conformément à l'invention.
La figure 5 est un schéma de réalisation d'une cellule électrochimique dans une pile à combustible.
La figure 6 est un schéma synoptique d'un électrolyseur équipé d'un dispositif de contrôle conforme au principe de l'invention.

### DESCRIPTION D'UN OU PLUSIEURS EXEMPLES DE REALISATION

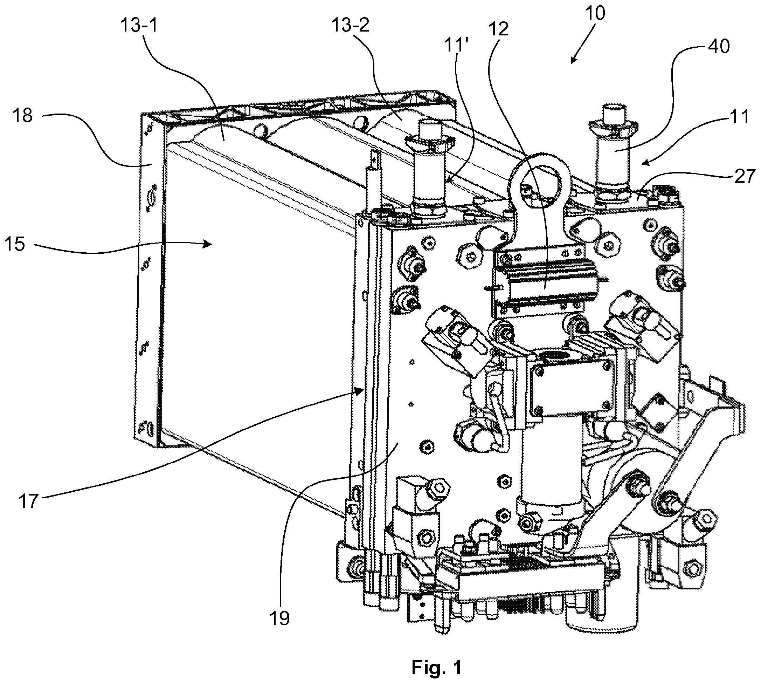

A la figure 1 est représenté l'extérieur d'une pile à combustible 10. Il comprend un corps monobloc de forme générale parallélépipédique 15 formé notamment d'un empilage de cellules électrochimiques enserrées entre deux plaques d'extrémité 17 et 18, l'une (17) étant appelée plaque système. On aperçoit au sommet de l'empilage les formes bombées 13-1 et 13-2 de deux tubulures 24 et 24' formés par des ouvertures alignées à l'intérieur de l'empilage de cellules pour leur alimentation en hydrogène et en oxygène respectivement comme il sera précisé ci-après. L'organisation de la pile à combustible 10 dans cet exemple est du type représenté et décrit dans la demande de brevet du demandeur WO 2007/045416.

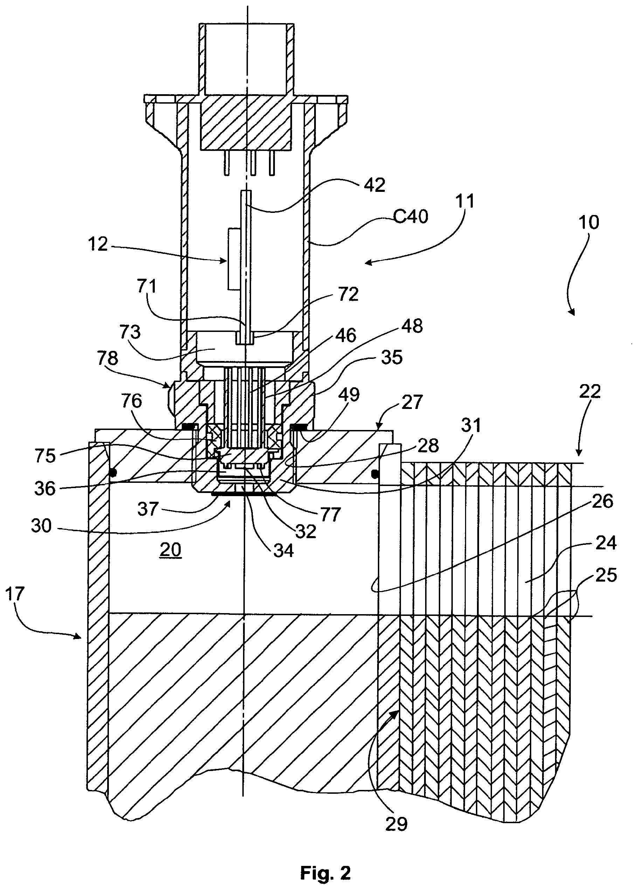

La plaque système 17 présente une face extérieure 19 dans laquelle sont ménagées les des ouvertures de communication avec différents organes fonctionnels tels que pompes, vannes, capteurs, etc. Ces organes dont certains sont bien visibles à la figure 1 peuvent être directement fixés dans cette face 19 et sont destinés à assurer la circulation de fluides à l'intérieur de la pile et les échanges avec l'extérieur. A l'opposé de la face 19, la plaque système 17 présente une face interne 29 directement accolée à une cellule d'extrémité d'un empilage de cellules électrochimiques qui constituent le coeur du système. L'empilage est traversé par des tubulures qui relient entre eux les canaux qui assurent la circulation des fluides nécessaires au fonctionnement de la pile ou du réacteur à l'intérieur de l'empilage. Les tubulures de l'empilage débouchent dans des ouvertures, telles que 26, figure 2, ménagées dans la face d'extrémité 29 de la plaque système 17. Dans son épaisseur, cette plaque système 17 est traversée par des passages, chambres ou conduits (qui peuvent être taillées dans la matière de la plaque) qui relient les tubulures de l'empilage 22 avec les organes fonctionnels accolés à la face externe 19 de la plaque système 17. La plaque 17 participe donc à la réalisation d'un ensemble compact et robuste pour réaliser au moins une grande partie des liaisons fonctionnelles entre les fluides de fonctionnement du réacteur.

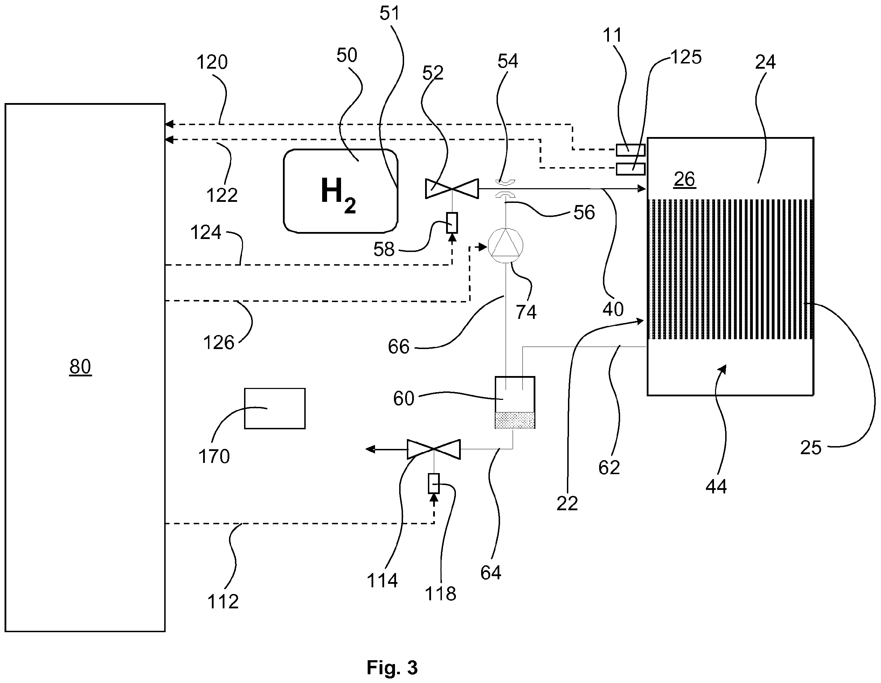

Plus spécifiquement, la plaque système 17 reçoit les entrées et sorties de deux tubulures 24 et 44, figure 2 et 3, d'un circuit de gaz combustible véhiculant un mélange traversant les empilages de cellules pour les alimenter en hydrogène d'un côté (24) et assurer l'évacuation (44) de l'hydrogène non consommé à la sortie de chacune des cellules. De la même façon la plaque système 17 abrite les canalisations d'entrée et sortie de l'oxygène pour les tubulures, non représentées, d'un circuit de mélange comburant qui desservent les cellules en oxygène. Un système de canalisations, non représentées, logé dans cette plaque assure la circulation d'un fluide de refroidissement de l'empilage des cellules de la pile. L'espace ménagé dans la plaque d'extrémité permet aussi d'y loger, entre autres les organes de connexion électrique, les organes de commande et de contrôle des flux représentés dans le synoptique de la figure 3 qui sera décrit en détail plus loin. Comme indiqué ci-dessus, la plaque système 17 permet aussi de fixer et de raccorder des organes de mesure, par exemple pour la mesure de la pression et de la température des gaz ainsi que la température du fluide de refroidissement. Conformément à une caractéristique de l'invention, un dispositif capable de fournir des informations sur la composition d'au moins un des mélanges gazeux présents à l'intérieur de la pile à combustible 10 est également prévu dans la plaque système 17. A cet effet, un capteur de concentration d'hydrogène 11 comprend une unité sensible 30 (visible à fig. 2) dont la tête débouche dans une chambre 20 constituant une partie d'un circuit à hydrogène aménagé à l'intérieur de cette plaque 17 et une unité de traitement 12, logé à l'intérieur du manchon C40 qui fait saillie hors de la plaque 17. L'unité de traitement 12 qui reçoit les signaux en provenance de l'unité sensible 30, est propre à fournir au système des mesures fonction notamment de la concentration d'hydrogène in situ dans le ou les mélanges gazeux opérationnels du réacteur. Outre leur rôle pour l'information directe de l'opérateur, ces mesures permettent comme on va l'expliquer d'opérer un suivi de marche du réacteur et, de préférence, un contrôle automatique de son fonctionnement. Dans la description qui suit on explique notamment comment les mesures produites sont utilisées pour permettre un contrôle optimisé de la purge intermittente du circuit hydrogène pour maintenir un niveau de pureté élevé. Les potentialités de mesure de la concentration en hydrogène sont également mises à profit, de façon non limitative, pour éviter un appauvrissement critique de l'atmosphère des cellules électrochimiques en hydrogène dans le cas où la pile à combustible est arrêtée en état de veille.

En se reportant à la figure 2, on voit une portion de l'espace interne de la plaque système 17 évoquée précédemment, comportant la chambre 20 pour l'admission de l'hydrogène en provenance d'un réservoir 50 visible sur la figure 3. Du côté opposé à la face d'extrémité externe 19 de la plaque 17, cette chambre est limitée par un empilage de cellules 25, sièges de la réaction électrochimique. Les cellules adjacentes sont traversées par une tubulure 24 d'alimentation en gaz hydrogène qui prend sa source dans la chambre 20 par une entrée 26.

Dans la face latérale supérieure 27 de la plaque système 17 est ménagé un perçage 28 traversé, à l'aide d'un joint d'étanchéité au gaz sous pression 49 approprié, par un embout creux 31 à l'intérieur duquel est logée et protégée une tête d'unité sensible 30, à une extrémité du corps de capteur de concentration d'hydrogène 11 également visible à la figure 1. La tête de l'unité sensible 30 comprend une plaquette de circuit 32, constituant une unité sensible, qui est montée dans une chambre 36 ménagée à la partie inférieure de l'embout 31. La chambre 36 communique avec la chambre 20 dans le réacteur par un canal 34 percé dans la paroi d'extrémité de l'embout creux 31. La plaquette 32 d'unité sensible, dont une face est tournée vers le débouché du canal 34 dans la chambre 36, est en contact direct avec l'atmosphère de la chambre 20 par le canal 34. Conformément à un aspect important, un filtre 37 est placé sur l'arrivée du canal 34 dans la chambre 36 pour isoler la plaquette 32 de tout contact avec l'eau liquide qui pourrait être mélangée aux gaz de la chambre 20 pour les raisons qui apparaîtront par la suite. Le filtre 37 est réalisé en un matériau qui est perméable aux gaz mais imperméable à l'eau liquide. On connaît par exemple le matériau tissé commercialement disponibles sous la marque « GORE-TEX » (marque déposée) pour son aptitude à cet usage. Il est essentiellement constitué d'un tissu synthétique en fils de Téflon (marque déposée).

Du côté opposé à l'embout creux 31, le corps du capteur de concentration d'hydrogène 11 comporte un manchon cylindrique 48 qui fait saillie hors de la paroi latérale externe 27 de la plaque 17, à partir d'une collerette de butée creuse 35 fixée dans cette paroi 27. L'unité de traitement 12 est réalisée par un circuit monté sur une plaque de circuit imprimé 42 dont les cosses à une extrémité 71 sont enfichées dans un connecteur 72 dans un boîtier de connexion 78 monté sur un support 73 dans l'espace interne du manchon cylindrique 48. Un ensemble de conducteurs électriques 46 connectés à une extrémité dans le boîtier de connexion 78 parcourent l'intérieur du manchon cylindrique 48 et l'intérieur creux de la collerette 35 pour aboutir à un bouchon de cloisonnement isolant 75 qui ferme la partie supérieure de la chambre 36 à l'extrémité de l'embout d'extrémité du capteur 31. Le bouchon 75 est hermétiquement fixé à l'intérieur d'une chemise 76 à l'intérieur de l'embout creux 31 pour pouvoir résister à la pression du gaz dans la chambre 36, sachant qu'à sa face supérieure il est soumis à la pression ambiante dans l'espace où est installée la pile à combustible. De plus, chaque conducteur 46 est raccordé électriquement à travers ce bouchon de cloisonnement 75 à un plot respectif 77 formé sur la face inférieure du bouchon 75 dans la chambre 34. Sur cette face inférieure est également collée la plaquette 32 de l'unité sensible 30 du capteur avec sa face sensible dirigée vers la chambre 34.

Chaque plot de sortie de la plaquette 32 de circuits sensibles est relié à un plot respectif 77 par un fil de connexion électrique, trop fin pour être visible sur la figure 2, appelé souvent "bonding", pour établir la liaison électrique entre l'unité sensible 30 et l'unité de traitement 12 par l'intermédiaire des conducteurs électriques 46. Les connexions électriques ou "bondings" sont réalisés de façon à résister à l'action corrosive de l'atmosphère présente au sein du réacteur. Des conducteurs en or sont préférables à l'aluminium traditionnellement utilisé pour les conducteurs de liaison électrique dans les capteurs industriels. Alternativement, une couche de protection recouvre les parties conductrices. Cette contrainte est liée à la nature de l'atmosphère rencontrée dans les réacteurs électrochimique d'oxydo-réduction. Les conducteurs électriques 46 traversent le bouchon 75 dans des perles de verre pour éviter d'en altérer l'étanchéité de façon à ce que le gaz contenu dans la chambre 20 ne s'échappe pas.

Muni de l'ensemble de ces précautions, le capteur de concentration d'hydrogène 11, avec son unité sensible 30, 32 et l'unité de traitement 12 est opérationnel pour effectuer des mesures in situ de paramètres physiques caractérisant les propriétés du gaz contenu dans la chambre 20 et notamment de sa teneur en hydrogène qui est un paramètre d'intérêt primordial pour la conduite de la pile. Il s'est avéré que la réalisation de mesures in situ en continu ou quasi continu à l'intérieur d'un réacteur électrochimique était rendue opérationnellement faisable grâce à l'intégration au réacteur d'un capteur sensible à la conductivité thermique du gaz dans lequel est plongée son unité sensible 30, 32. La mesure de ce paramètre s'avère particulièrement adaptée à la détection des teneurs en hydrogène dans l'atmosphère d'un réacteur électrochimique tel qu'une pile à combustible. On sait en effet que la conductivité thermique de l'hydrogène est la plus élevée dans la nature en ce qui concerne les gaz. Cette propriété facilite sa détection parmi d'autres gaz, notamment l'oxygène et l'azote avec lesquels il est susceptible de se trouver mélangé dans certains environnements. On rappelle que pour effectuer ce type de mesure, le capteur comporte une plaquette de matériau qui est chauffée, par exemple au moyen d'une résistance parcourue par un courant électrique. En mesurant la puissance électrique consacrée au maintien d'une température déterminée on peut connaître la puissance dissipée par la déperdition de calories dans l'atmosphère où se trouve plongée la plaquette et en déduire la conductivité thermique du gaz environnant.

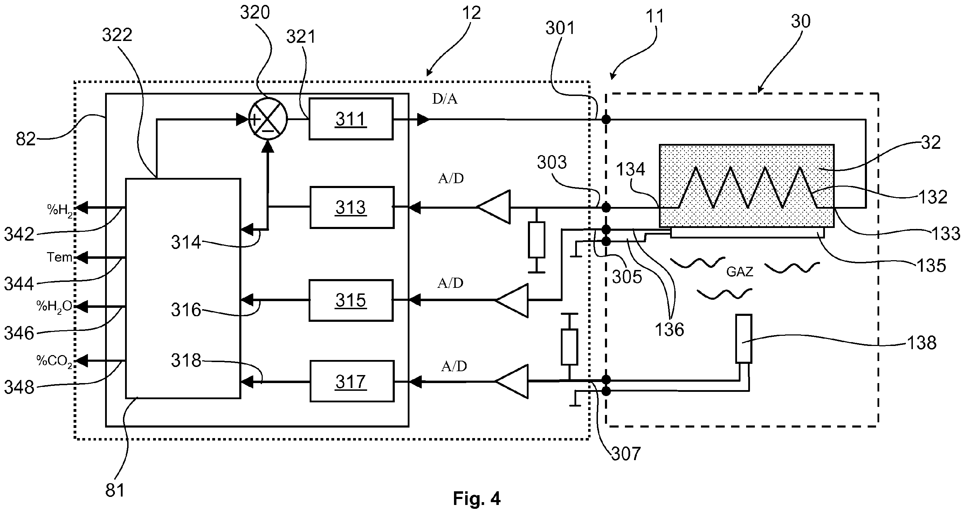

Telle que très schématiquement représentée à la figure 4, on voit que la plaquette 32 de circuits sensibles du capteur de concentration d'hydrogène 11 est composée d'un substrat en forme de plaque ou de film, par exemple en silicium. Le substrat est revêtu d'une résistance électrique de chauffage 132, intégrée ou déposée, alimentée à partir de bornes d'alimentation 133 et 134 par une source de courant contrôlée par l'unité de traitement 12. Une des faces de la plaquette 32 comporte un capteur de température 135, par exemple formé par une couche thermoresistive dite PT100, relié par un jeu de conducteurs 136 à l'unité de traitement 12 pour fournir les signaux correspondant à la température instantanée de la plaquette d'unité sensible 32, sous la double action du chauffage et de la dissipation calorifique dans le gaz ambiant. En outre, le capteur de concentration d'hydrogène 11 intègre une sonde de température 138, par exemple une sonde PT 100, pour connaître la température du gaz ambiant. La partie physique de tels capteurs est par exemple décrite dans les documents de brevet EP 0291 462 B1 du 11 mai 1988 et EP 0 501 089 A1 du 25 février 1991.

Sur la figure 4, on voit que l'unité de traitement 12 du capteur de concentration d'hydrogène 11 comprend un module numérique 82 relié par quatre lignes de signaux à l'unité sensible 32. Le module numérique 82, schématisé sur la figure 4, est une représentation synoptique des fonctions d'un algorithme implanté dans un microcontrôleur et qui comprend un module de calcul 81 des grandeurs de sortie du capteur de concentration d'hydrogène 11 en direction de l'unité de commande 80 de la pile à combustible, schématisée à la figure 3.

La première ligne 301 à la sortie de l'unité de traitement 12 contrôle, via un convertisseur numérique/analogique, la tension appliquée sur la résistance de chauffage 132 du capteur de la plaquette 32. La valeur de la tension est commandée à partir d'un étage de régulation de la puissance de chauffage 311 dans l'unité de commande 80.

La deuxième ligne 303 reçoit le signal de tension image du courant traversant la résistance de chauffage 132. Cette information est convertie par un convertisseur numérique/analogique A/D à l'entrée de l'unité de traitement 12 pour être exploitée par un circuit de contrôle 313 de la puissance de chauffe réellement dissipée dans la résistance 132 du capteur de concentration d'hydrogène 11. On voit sur le schéma que cette information, envoyée à comparateur 320 dans le module numérique 82 est comparée à une valeur de consigne produite en sortie 322 du module de calcul 81. Dans le module numérique 82, le produit de la comparaison de ces deux grandeurs contrôle l'entrée 321 du régulateur de puissance de chauffe 311. Le chauffage de la plaquette 32 de l'unité sensible 30 est donc généré par une boucle de contre réaction numérique à partir de la consigne de puissance de chauffe affichée à chaque instant à la sortie 322 du module numérique 82. La puissance de chauffage constante permet d'atteindre une meilleure précision de mesure.

La troisième ligne 305 permet de recevoir à une entrée de l'unité de traitement 12 le signal analogique de sortie du capteur de température 135 de la plaquette 32. Après conversion analogique numérique ce signal est exploité par un calculateur de température 315 dans le module numérique 82 qui alimente à son tour le module de calcul 81 avec cette information.

Enfin la quatrième ligne 307 correspond à une entrée de l'unité de traitement 12 qui reçoit la tension de sortie de la sonde de température 138 (température ambiante) et, après conversion analogique numérique, transmet l'information à un calculateur de température 317 dans le module numérique pour l'afficher à l'entrée du module de calcul 81.

Le module de calcul 81 qui reçoit donc, sur ses entrées 314, 316, et 318, les informations de puissance effective de chauffage du capteur, de température de la plaquette 32 et de température ambiante de la sonde de température 138 permet de déterminer dans l'ordre les mesures de: teneur en hydrogène mesurée, température ambiante, pourcentage de vapeur d'eau (tel qu'obtenu par la technique décrite ci-après ou à partir d'un capteur d'humidité spécifique non représenté) et teneur en gaz carbonique CO2 aux quatre sorties 342, 344, 346 et 348, comme il sera explicité ci-après.

Dans certains cas, le capteur peut être directement étalonné en fonction de la concentration du milieu gazeux en hydrogène. Quand un autre composant est présent dans le mélange une deuxième mesure peut s'avérer nécessaire. On peut ainsi, en présence de vapeur d'eau utiliser une technique où une deuxième mesure est effectuée à puissance de chauffe différente qui aboutit à une température d'équilibre différente. La conductivité de la vapeur d'eau ayant une dépendance à la température différente de celle de l'hydrogène, la combinaison des deux mesures à des températures différentes permet de calculer le pourcentage de vapeur d'eau en même temps que la teneur réelle du gaz humide en hydrogène. Comme indiqué précédemment, une autre solution consiste à recourir à une mesure spécifique directe de la teneur en vapeur d'eau par un capteur de type connu, fonctionnant par exemple sur un principe de mesure capacitive, intégré dans l'unité sensible 30.

On note qu'avec la technique évoquée, il n'est pas aisé de déterminer ces concentrations si un gaz supplémentaire se trouve présent dans le mélange. Fort heureusement il se trouve que, dans l'application considérée, l'hydrogène et le dioxyde de carbone ne sont pas susceptibles de cohabiter. En effet, dans un réacteur électrochimique de technologie actuelle, qui met en jeu des réactions d'oxydoréduction, c'est précisément l'absence d'hydrogène qui est à l'origine des phénomènes de corrosion conduisant à la production de dioxyde carbone dont la conductivité thermique est nettement inférieure à celle de l'air, soit 16.4 mW/Km à 25°C. Il est donc possible d'employer une technique similaire pour mesurer la présence de dioxyde de carbone à la place de l'hydrogène.

Revenant à la structure du réacteur proprement dit, la figure 3 représente schématiquement un empilage 22 de cellules 25 traversées par la tubulure 24 dont l'entrée 26 reçoit de la chambre 20 l'hydrogène sous pression fourni par une canalisation d'entrée 40. Une tubulure 44 traverse également l'empilage 22 pour évacuer le mélange hydrogène chargé d'humidité, recueilli à la sortie de chaque cellule électrochimique 25 après avoir été mis en contact réactionnel avec les composants de chaque cellule du côté de l'anode.

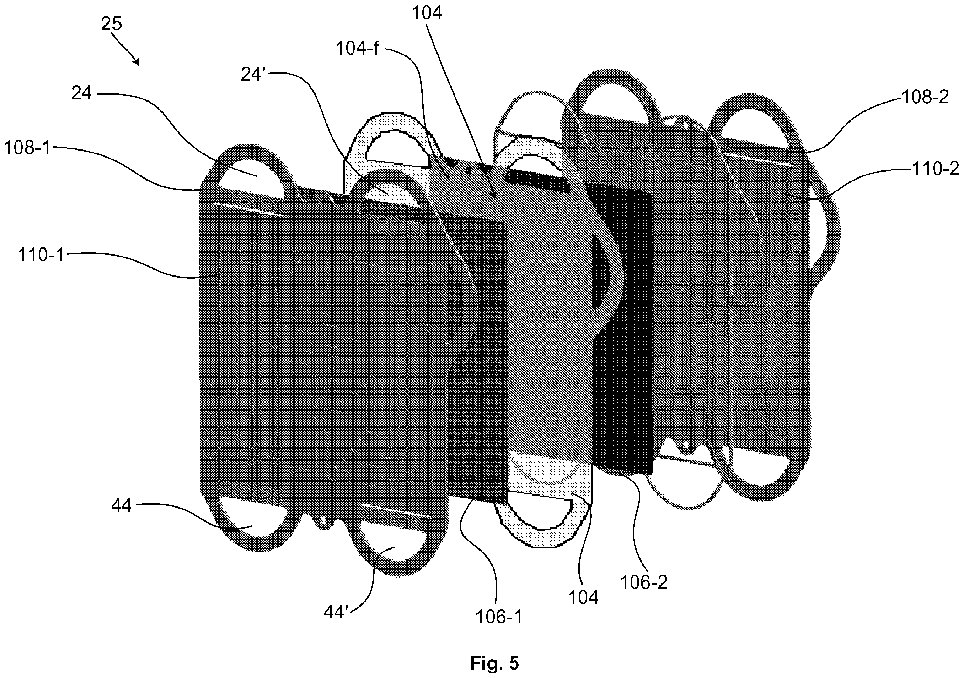

Si l'on se reporte maintenant à la figure 5, elle représente une vue éclatée d'une cellule électrochimique pour un réacteur tel que celui de la pile combustible 10 de la figure 1. Chaque cellule électrolytique 25 de l'empilage 22 est réalisée sur la base d'une membrane 104 d'électrolyte solide constitué par exemple d'un matériau polymère développé et commercialisé par la firme DuPont sous l'appellation de Nafïon®. Cette membrane est humidifiée en permanence par l'eau véhiculée par le gaz et également par l'eau produite par la réaction dans la cellule. Chaque face 104-f de cette membrane est en contact intime avec un catalyseur constitué par exemple d'une fine couche de graphite imprégnée de platine, non représentée. De chaque côté, la membrane ainsi revêtue est en contact étroit avec une couche diffuseuse de gaz respectivement 106-1 et 106-2.

L'ensemble est comprimé entre deux plaques métalliques 108-1, respectivement 108-2, appelés plaques bipolaires et chargées d'assurer chacune la mise en contact d'un des gaz de la réaction avec les couches diffuseuses de gaz par un système de canaux 110-1, respectivement 110-2. Ces canaux sont gravés dans une des faces de chaque plaque pour obliger le gaz à irriguer le catalyseur, selon un trajet sinueux de grande longueur. On notera ici pour mémoire que l'autre face de chaque plaque est également gravée pour former un réseau de canaux pour la circulation d'un fluide de refroidissement dans chaque cellule. Du côté anode de la cellule électrochimique, ce ou ces canaux du circuit de gaz hydrogène débouchent à une entrée du côté de la tubulure 24 alimenté sous pression et se terminent à une sortie dans la tubulure 44 qui véhicule donc le gaz non absorbé par la réaction au contact avec la membrane 104 lors de leur passage dans la cellule (respectivement les tubulures 24' et 44' pour l'autre gaz -gaz oxygène-). Chaque plaque métallique 108-1 constitue aussi, électriquement, une plaque d'anode qui recueille les électrons issus de la réaction électrochimique dont elle assure la conduction par les conducteurs adaptés vers la sortie de la pile et le cas échéant vers une charge utilisatrice extérieure. Chaque plaque d'anode d'une cellule est appliquée contre une plaque de cathode 108-2 de la cellule voisine en réalisant ainsi une connexion électrique en série de ces deux cellules de façon à obtenir une tension suffisante à la sortie de l'empilage de cellules. Ainsi, de l'autre côté de chaque plaque d'anode 108-1, la cellule électrochimique comprend une plaque de cathode métallique 108-2 assurant l'alimentation de la cellule en gaz oxydant placé en contact intime avec le catalyseur. Cette plaque de cathode est connectée électriquement à la sortie cathodique de la pile..

Revenant à la figure 3, un réservoir 50 de combustible hydrogène pur ou quasi pur sous pression comprend une vanne de sortie 51 tout ou rien. La pression de sortie de l'hydrogène est contrôlée par une électrovanne proportionnelle 52, qui fait suite à la vanne 51, pour détendre le gaz à un niveau de pression finement contrôlable. Cette vanne est raccordée à la canalisation 40 par un venturi 54. Le gaz détendu est envoyé dans les cellules électrochimiques de la pile où il subit une forte perte de charge. Il faut noter que le débit d'hydrogène n'est pas contrôlé par le système. En fonctionnement, la pile « prend » exactement la quantité d'hydrogène dont elle a besoin pour produire le courant prélevé. Il faut par contre assurer que le gaz soit amené avec une pression suffisante. C'est le rôle de l'électrovanne proportionnelle 52 d'assumer cette régulation de la pression. On pourrait en variante faire en sorte de réguler la pression en fonction de l'information de concentration d'hydrogène mesurée par le capteur de concentration d'hydrogène 11. L'hydrogène non consommé dans chaque cellule 25 est repris, avec les éventuelles impuretés non hydrogène présentes à l'entrée dans les cellules, par la tubulure 44 pour être recueilli dans une conduite de sortie 62. Cette conduite débouche dans un condenseur 60 où une partie de la vapeur d'eau que ces gaz contiennent se liquéfie. Elle peut être extraite à la base du condenseur 60 et évacuée hors de la pile, sous l'effet de la pression régnant dans le circuit hydrogène, par une canalisation de sortie 64 commandée par une électrovanne 114 activée par un actuateur 118 placé sous le contrôle d'une unité de commande informatisée 80 affectée à la conduite de la pile.

Après leur déshumidification dans le condenseur 60, les gaz issus de la tubulure 44 sont récupérés hors du condenseur 60 par une conduite 66 qui les amène à une pompe de reprise ou de recirculation 74. Cette dernière est raccordée à une admission secondaire 56 du venturi 54 grâce à laquelle les gaz repris peuvent être réinjectés dans la canalisation 40 pour se mélanger avec le courant de gaz frais issu du réservoir 50.

Le cycle se poursuit, jusqu'au moment où l'électrovanne 114 déclenche une phase de purge qui se traduit par l'évacuation d'une portion du gaz du condenseur 60 au lieu de la recycler, pour diminuer la quantité d'impuretés en gaz non hydrogène qui tendent à s'accumuler du fait du recyclage dans le mélange gazeux présent dans le circuit hydrogène formé par les canalisations 40, conduite de sortie 62, conduite 66, admission secondaire 56, les tubulures 24 et 44 et les canaux d'alimentation de la membrane électrolytique 104 dans chaque cellule de l'empilage 22. En ce qui concerne le circuit oxygène non représenté, il n'y a généralement pas de recyclage lorsque la pile utilise l'air dans le circuit comburant. Dans le cas où le circuit oxygène est alimenté par de l'oxygène pur, un circuit similaire à celui représenté figure 3 pour l'hydrogène peut être prévu avec un recyclage et un système de purge automatique mais sans possibilité de recourir à un capteur de concentration gazeuse à conductivité thermique en raison de la trop grande proximité des conductivités des gaz susceptibles d'être présents dans le mélange gazeux.

Pour compléter la description du système illustré par la figure 3, le capteur de concentration d'hydrogène 11 est relié à l'unité de commande 80 par les sorties 342, 344, 346, et 348 de la figure 4, schématiquement regroupées par la ligne de commande 120 sur la figure 3. Pour une bonne précision, l'électronique de traitement 12 est placée tout près du l'unité sensible du capteur et montée dans le même corps de capteur fixé dans la paroi de la chambre 20, comme représenté à la figure 2. Une autre ligne de commande 122 transmet à l'unité de commande 80 les informations de mesure de la pression gazeuse à l'intérieur de la tubulure 24 fournies par un capteur de pression 125 disposé à côté du capteur de concentration d'hydrogène 11 dans la paroi externe de la tubulure 24. Une ligne de commande 124 issue de l'unité de commande 80 permet de contrôler un actuateur 58 d'activation de l'électrovanne proportionnelle 52 de réglage de la pression. Enfin, l'unité de commande contrôle également une ligne de commande 126 raccordée au moteur de la pompe 74 pour assurer le contrôle de vitesse de rotation de cette dernière, sous le contrôle des mesures fournies par les capteurs 11 et 125, notamment.

Dans l'industrie des réacteurs électrochimiques, notamment des piles à combustible, il est coutumier d'employer des gaz très purs, au moins pour le comburant hydrogène. Cependant, les quelques traces d'impureté que contient le gaz du réservoir 50 (fig.3) s'accumulent au fur et à mesure qu'il est re-circulé dans les éléments de la pile avec des apports de gaz frais. Ainsi par exemple, dans une pile qui consomme, dans les conditions normales de température et de pression, 100 litres par minute d'un gaz hydrogène qui contient au départ 0,5% d'une impureté d'un autre gaz, il entre dans le circuit d'alimentation combustible de la pile un demi litre normal d'impureté non hydrogène toutes les minutes. L'accumulation d'impureté peut s'effectuer rapidement. Il est donc nécessaire de maintenir le niveau de pureté au dessus d'un seuil élevé par des purges du circuit de sortie hydrogène à intervalles de durée fixe relativement fréquents, donc en extrayant des quantités de gaz peut-être supérieures à ce qui serait strictement justifié par les besoins.

Conformément à un des aspects de l'invention, on profite de la disponibilité d'une technique de mesure de la teneur en hydrogène appropriée aux circonstances des réacteurs électrochimiques pour contrôler la purge du circuit hydrogène en fonction des mesures de la concentration en hydrogène pur réalisées à partir du capteur de concentration d'hydrogène 11 dans le circuit à gaz hydrogène. Lorsqu'en fonctionnement la concentration suivie atteint un niveau déterminé indiquant que le pourcentage de gaz hydrogène dans le circuit de gaz hydrogène tombe sous un seuil déterminé, l'unité de commande 80 intervient sur la commande 115 de l'électrovanne 114 de purge pour modifier les conditions de purge du circuit.

L'unité de commande 80 de cet exemple est programmée opérationnellement, pour surveiller la concentration en hydrogène de la tubulure 24 par rapport à un seuil inférieur qui correspond à un taux d'impureté non hydrogène considéré comme limite pour le bon fonctionnement de la pile. Ainsi, en suivant une pratique actuellement courante, si la concentration d'hydrogène est supérieure à 99%, l'électrovanne 114 de purge est ouverte selon une fréquence et une durée minimales de façon à évacuer les éventuels excès d'eau sans gaspiller d'hydrogène. En revanche, lorsque l'unité de commande détecte que ce taux d'hydrogène descend en dessous de 99% en fonction des informations transmises par le capteur de concentration d'hydrogène 11, la fréquence d'ouverture de l'électrovanne 114 de purge sur la canalisation de sortie 64 d'extraction du condenseur 60 est augmentée. Dès que la concentration d'hydrogène détectée par le capteur entre deux purges remonte en raison du renouvellement du gaz contenu dans le circuit, l'unité de commande réduit à nouveau la fréquence d'ouverture de l'électrovanne 114 de purge. Bien entendu, on peut utiliser le capteur de concentration d'hydrogène 11 pour contrôler différemment les fonctions de purge par exemple en déclenchant la purge à des intervalles réguliers et en agissant sur la durée d'ouverture.

On a décrit ici un mode de réalisation avantageux d'un système de purge d'un circuit principal de gaz dans la pile pour en garder le fonctionnement au voisinage de l'optimum, en pilotant le processus de purge de circuit en fonction des mesures réalisées in situ et de manière continue ou quasi continue, en cas de besoin, par un capteur de concentration d'hydrogène 11 à conductivité thermique dont on a décrit l'implantation à propos de la figure 2. On comprend que cette disposition permette d'optimiser la consommation d'hydrogène pur à l'entrée de la pile combustible en fonction des taux de pollution réelle du gaz comburant stocké dans le réservoir ou dans l'atmosphère du réacteur lui-même. De fait, contrairement à ce qui est généralement préconisé, cette disposition ouvre enfin la possibilité d'alimenter la pile à combustible avec de l'hydrogène de moindre pureté sans risquer de l'altérer. Le coût de production des gaz évoluant très fortement avec la pureté recherchée, le fait de pouvoir utiliser de l'hydrogène de moindre pureté est un avantage économique considérable en faveur du développement de la pile à combustible.

Selon un autre aspect, un capteur de teneur en gaz, tel que 11 décrit précédemment, est utilisé dans la pile, concomitamment ou non avec la fonction de contrôle de purge qui vient d'être décrite, pour maintenir l'intégrité du système pendant l'extinction et la période de repos ou stockage qui s'ensuit. Spécifiquement l'unité de commande 80 est programmée pour poursuivre la surveillance de la teneur en hydrogène du circuit de gaz combustible à partir de mesures périodiques commandées au capteur de concentration d'hydrogène 11 et vérifier que de l'hydrogène est toujours présent. L'expérience des piles à combustible fonctionnant sur le modèle ici décrit montre en effet que certains éléments de la pile, notamment les éléments contenant du carbone comme les supports de catalyseur à base de graphite doivent être maintenus à un potentiel voisin de, ou égal à zéro. Cette condition est respectée tant que ces éléments sont environnés d'hydrogène dont le potentiel électrochimique est nul. Dans le cas contraire, le potentiel électrochimique s'élève à environ 1 volt en raison de l'oxygène pénétrant lentement mais irrémédiablement dans l'environnement des cellules électrochimiques d'une pile stockée dans l'air. Cette présence est susceptible de créer une condition électrique favorable à l'oxydation des éléments en graphite et de ruiner ainsi une partie vitale pour le fonctionnement du système.

Le demandeur a pu déterminer qu'un capteur à conductivité thermique tel que 11 se prêtait également très bien à la détection d'un seuil de concentration relativement faible (quelques pourcent) à respecter dans le circuit hydrogène de la pile pour éviter que l'environnement des éléments sensibles à l'oxydation n'entre en pénurie d'hydrogène (phénomène connu sous l'étiquette de "H2 starvation") pendant la durée de la phase d'extinction de la pile ou ultérieurement pendant les périodes de repos. Pour prévenir cette condition, la procédure d'extinction peut avantageusement être opérée en fonction de l'information de concentration d'hydrogène fournie par le capteur de concentration d'hydrogène 11. Pendant la phase de repos qui lui succède, le capteur de concentration d'hydrogène 11 est réveillé périodiquement pour effectuer une mesure. Par exemple, lorsque l'unité de commande détecte l'imminence d'un telle condition dans les informations fournies par le capteur de concentration d'hydrogène 11, elle déclenche par la ligne de commande 124 l'ouverture de la vanne d'admission d'hydrogène pur pour rétablir à un niveau programmé le taux d'hydrogène dans le circuit combustible du réacteur à l'extinction ou en état de stockage.

Selon une variante, la canalisation de sortie 64 à la sortie du condenseur 60 est raccordée à un petit réservoir tampon 170 qui est normalement maintenu à la pression du gaz combustible évacué hors de la pile lors des purges. Lorsque la pile est en phase d'extinction ou en état de veille, la pression interne dans le circuit hydrogène est abaissée à une pression généralement proche de la pression atmosphérique. Lorsque l'unité 80 commande l'actuateur 115 pour une ouverture temporaire de l'électrovanne 114, la différence de pression permet à une quantité de gaz du petit réservoir tampon 170 de pénétrer à travers le condenseur 60 dans le circuit hydrogène pour rétablir la teneur en hydrogène à un niveau convenable. Le demandeur a même constaté que lorsque la canalisation de sortie 64 se prolonge suffisamment loin au-delà de l'électrovanne 114, elle est susceptible de constituer par elle-même une réserve tampon suffisante pour rétablir la teneur en hydrogène minimale recherchée, lorsque l'électrovanne 114 est commandée à l'ouverture.

Conformément à un aspect possible de la conduite de la pile à l'aide d'un capteur tel que 11, l'unité de commande est programmée dans cet exemple pour développer une mesure de la teneur en vapeur d'eau des gaz entrant dans la tubulure 24 du circuit à hydrogène. On se rappelle que le gaz qui pénètre dans ce circuit par la canalisation d'entrée 40 est le produit d'un mélange de gaz hydrogène pur et sec issu du réservoir 50 et d'un gaz recirculé par le venturi avec éventuellement l'assistance de la pompe 71. Sachant que l'eau est un des produits de la réaction électrochimique dans la pile, le gaz entraîné à la sortie du condenseur dans la conduite 66 est saturé en humidité. Le degré d'humidité du gaz pénétrant à l'entrée 26 de la tubulure 24 peut donc être réglé par le dosage du mélange. Ce paramètre est important pour le fonctionnement de la pile puisque l'électrolyte solide à membrane qui est siège de la réaction électrochimique doit rester humide pour pouvoir fonctionner de façon optimale. En conséquence, sous le contrôle de l'unité de traitement 12, le capteur de concentration d'hydrogène 11 réalise une première et une deuxième mesures de conductivité à des écarts de température T₁ et T₂ par rapport à l'ambiante à partir desquelles la conductivité de l'hydrogène pur et la teneur en vapeur d'eau peuvent être déterminées par l'unité de commande. Alternativement, on a vu que la teneur en vapeur d'eau peut-être fournie par un autre capteur spécifique, par exemple un capteur capacitif. Dans chaque cas, l'unité de commande 80 ajuste le régime de la pompe de recirculation de façon maintenir le taux d'humidité dans une fourchette déterminée favorable au bon fonctionnement de la membrane d'électrolyte solide tout en maintenant la teneur en hydrogène du gaz entrant dans la tubulure 24 à un niveau convenable .

Il peut être avantageux d'utiliser dans la pile à combustible 10 deux capteurs de concentration gazeuse tels que 11. Sur la figure 1, on voit apparaître outre le capteur de concentration d'hydrogène 11 à l'entrée du circuit à combustible hydrogène, un deuxième capteur de concentration en hydrogène 11' à l'entrée du circuit à comburant d'oxygène (ou d'air pressurisé), qui peut être identique au capteur de concentration d'hydrogène 11. Pour la mesure de la teneur en humidité du gaz envoyé vers la cathode, il peut y avoir intérêt à faire la mesure à partir du circuit d'oxygène à l'aide du capteur de concentration d'hydrogène 11'. Le gaz circulant se charge davantage en eau du côté du circuit oxygène (circuit cathode) que du côté du circuit à hydrogène (circuit anode).

Enfin, selon une application bienvenue, un capteur de concentration d'hydrogène tel que 11 peut permettre, le cas échéant, de détecter la présence d'un début de corrosion par la présence de dioxyde de carbone dans le circuit oxygène. On sait que la conductivité thermique du dioxyde de carbone est faible par rapport à celle de nombreux gaz courants et notamment l'azote et l'oxygène, dont les conductivités sont très voisines, et, bien entendu, encore davantage par rapport à celle de l'hydrogène. Il peut être avantageux d'utiliser dans la pile à combustible 10 deux capteurs de concentration gazeuse tels que 11. Sur la figure 1 on voit apparaître outre le capteur de concentration d'hydrogène 11 à l'entrée du circuit à combustible hydrogène, un deuxième capteur de concentration en hydrogène 11' à l'entrée du circuit à comburant d'oxygène (ou d'air pressurisé), qui peut être identique au capteur de concentration d'hydrogène 11. Pour la détection d'un défaut de perméabilité entre les deux circuits, tel que par exemple un trou dans une membrane, le capteur 11 permet de déceler la présence d'oxygène dans l'hydrogène et le capteur 11' permettrait de déceler la présence d'hydrogène dans l'oxygène. La diffusion d'un gaz dans l'autre étant susceptible de compromettre la sécurité, il est intéressant de disposer de cette redondance d'information.

Enfin, selon une application bienvenue, un capteur de concentration d'hydrogène tel que 11 peut permettre, le cas échéant, de détecter la présence d'un début de corrosion par la présence de dioxyde de carbone dans le circuit oxygène. On sait que la conductivité thermique du dioxyde de carbone est faible par rapport à celle de nombreux gaz courants et notamment l'azote et l'oxygène, dont les conductivités sont très voisines, et, bien entendu, de celle de l'hydrogène. Connaissant la conductivité thermique de ces gaz, il est aisé de programmer le capteur de concentration d'hydrogène 11 ou 11' pour calculer la teneur du mélange gazeux en dioxyde de carbone et de détecter ainsi la présence de CO2 même dans de petites quantités à partir des mesures du capteur de concentration en hydrogène.

Du côté de l'anode la circulation d'un gaz à concentration élevée en hydrogène implique un potentiel nul pour les parties en contact et évite donc le risque de corrosion tant qu'il y a suffisamment d'hydrogène. En conséquence si on prend les précautions déjà exposées à l'arrêt de la pile les risques de corrosion sont bien maîtrisés. La faculté supplémentaire offerte par le capteur de concentration d'hydrogène 11 ou 11' dans ce cas concerne donc surtout dans les phases d'étude et de mise au point d'un système de pile à combustible. Elle représente cependant un auxiliaire de sécurité appréciable.

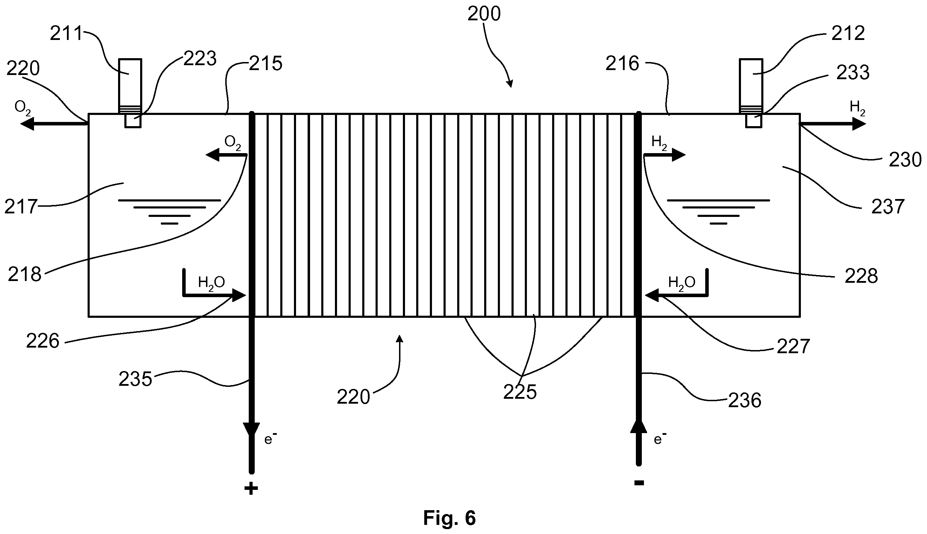

La figure 6 représente de façon très schématique un appareil d'électrolyse industriel qui peut être utilisé pour fabriquer de l'hydrogène et de l'oxygène à partir d'énergie électrique. Pour ce type d'application, il est important de s'assurer de la bonne qualité des gaz produits. Non seulement il importe que les gaz produits soient aussi purs que possible en vue des applications prévues mais, compte tenu de la nature même de ces gaz, de tels mélanges peuvent faire courir un grand danger à la sécurité des biens et des personnes. Dans ce type d'installation, le circuit hydrogène comprend une tubulure qui relie toutes les sorties des mini canaux de gaz des plaques de cathode pour les rassembler vers la sortie hydrogène de l'empilage. De la même façon une tubulure oxygène relie les sorties oxygène des plaques des cellules élémentaires de l'empilage à une sortie externe à l'installation. Dans chaque circuit les gaz produits peuvent être plus ou moins purs parce qu'une partie de ces gaz produits se diffuse à travers l'électrolyte avant d'être recueillie. D'autre part, la présence de fuites peut engendrer des échanges d'hydrogène et d'oxygène entre les circuits, qui pourraient s'ils ne sont pas détectés à temps conduire à des risques graves d'explosion d'un mélange hydrogène et oxygène.

Selon cet aspect de l'invention, figure 6, on utilise deux capteurs de concentration d'hydrogène à conductivité thermique, l'un 211 dans une chambre 217 à l'intérieur d'une plaque système d'extrémité 215, intégrée à un corps de réacteur formée par un empilage de cellules avec tubulure oxygène de sortie non visible sur la figure, côté anode, et l'autre 212, coté cathode, dans une chambre 237 à l'intérieur d'une plaque système d'extrémité 216 intégrée avec ledit corps à la sortie d'une tubulure hydrogène non visible. L'un des ces capteurs mesure donc de faibles concentrations de gaz hydrogène et l'autre des concentration fortes. Un avantage ici réside dans la possibilité de mesurer la qualité des gaz produits directement dans l'électrolyseur sans nécessiter de prélèvements intermittents ou continus d'échantillons de gaz.

Dans la figure 6, un électrolyseur 200 comprend un empilage 220 de cellules électrochimiques élémentaires 225. Elles sont alimentées en eau qui est décomposée en hydrogène et oxygène, en présence d'un catalyseur, sous l'effet du courant électrique qui les traverse. L'empilage 220 est enserré entre deux plaques système d'extrémité, dont l'une 215 renferme une enceinte de séparation dont la partie supérieure forme une chambre 217 qui reçoit l'oxygène issu de l'empilage de cellules 225. L'autre plaque 216 renferme une enceinte de séparation dont la partie supérieure forme une chambre 237 qui reçoit l'hydrogène issu de la réaction dans les cellules 225. Dans chacune des plaques la partie basse de l'enceinte de séparation débouche à l'entrée, respectivement 226 et 227, d'une tubulure non visible d'amenée d'eau aux cellules 225 à l'intérieur de l'empilage 220.

L'oxygène collecté dans la plaque de séparation 215 à partir du conduit 218 se sépare de l'eau contenue dans le circuit, qui est récupérée au fond de l'enceinte de séparation 217 pour être recyclée dans l'électrolyseur à l'entrée 226. La chambre 217 à la partie supérieure l'enceinte de séparation 217 contient une prise de soutirage 220 de l'oxygène produit. Dans la partie supérieure cette chambre 217 débouche l'unité sensible 223 du capteur de concentration en hydrogène 211 qui permet de vérifier la pureté du gaz oxygène produit et de détecter à l'avance toute condition potentiellement dangereuse dans laquelle le pourcentage d'hydrogène augmenterait au delà d'un seuil de sécurité. De la même façon, l'hydrogène produit par les cellules est envoyé par un conduit 228, issu de l'empilage 220, dans l'enceinte de séparation formée à l'intérieur de la plaque système 216. L'eau qui s'accumule dans le fond l'enceinte de séparation de la plaque 216 est recyclée à l'entrée 227 d'une tubulure d'alimentation en eau, non visible, des cellules 225 de l'empilage. L'hydrogène admis dans la plaque 216 s'accumule dans la chambre 237 à la partie supérieure de la plaque système 216. Dans cette chambre 237 débouche l'unité sensible 233 du capteur de concentration en hydrogène 212 qui permet de vérifier la pureté du gaz hydrogène produit, lequel peut être évacué par une prise de soutirage 230. La réaction est alimentée en énergie électrique par un générateur auquel sont connectées une plaque collectrice de courant coté circuit anode 235 et une plaque collectrice de courant coté circuit cathode 236.

On a donc décrit un système de contrôle opérationnel d'un réacteur électrochimique, pile à combustible ou électrolyseur, bien adapté à un fonctionnement en continu de cet appareillage, sans nécessiter de prélèvement d'échantillon en dehors des chambres intégrées au corps du réacteur ni même d'interrompre le fonctionnement de celui-ci. La versatilité, la souplesse d'emploi, la grande échelle de sensibilité, l'excellent temps de réponse du capteur de conductivité thermique, dans l'environnement particulier des réacteurs électrochimiques et notamment des réacteurs à oxydoréduction où intervient l'hydrogène, font de ce type de capteur un outil précieux. Il est plus particulièrement performant pour mesurer la concentration d'hydrogène, et éventuelle d'autres gaz, notamment gaz carbonique CO2 dans le milieu surveillé et pour gérer de façon simple et économique les paramètres et les conditions de fonctionnement d'un réacteur électrochimique. C'est encore plus vrai lorsque, non content d'appliquer une telle mesure à la gestion d'une seule fonctionnalité du capteur, on entend en profiter pour contrôler simultanément ou concomitamment plusieurs paramètres susceptibles d'avoir une incidence sur la conduite de la pile, ses conditions de conservation à l'état de veille et ses performances en marche courante. Grâce à l'utilisation de capteurs de concentration gazeuse par mesure de la conductivité thermique, on peut réaliser un nombre substantiel de fonctions de contrôle d'un tel processus électrochimique. Le système permet en outre d'effectuer à la fois une surveillance de la qualité des gaz fournis dans le cas d'un électrolyseur et un contrôle permanent de la sécurité de fonctionnement de celui-ci.

L'invention n'est bien entendu pas limitée aux exemples décrits et représentés et diverses modifications peuvent y être apportées sans sortir de son cadre défini par les revendications annexées.

## Revendications

1. Réacteur électrochimique, tel qu'une pile à combustible ou un électrolyseur, comportant: un empilage (22) de cellules électrochimiques (25), dont chacune comprend au moins une plaque d'électrode (108-1) possédant une face en contact électrique avec un électrolyte; au moins une tubulure (24) reliée à ladite face de chacune des cellules dans un circuit d'échange d'un gaz avec l'extérieur de l'empilage; un capteur (11) sensible à la composition dudit gaz dans le circuit; et au moins un organe de suivi d'une condition du réacteur, notamment sous le contrôle dudit capteur, ce réacteur étant tel que l'empilage de cellules et la dite tubulure forment un corps de réacteur monobloc (15) qui comporte au moins une chambre (20) intégrée dans ce corps en communication avec ladite tubulure et tel que ledit capteur de composition du gaz (11) est monté dans le dit corps monobloc et comprend une unité sensible (30) exposée directement à la concentration in situ d'un composant dudit gaz dans la dite chambre (20), ce réacteur étant **caractérisé en ce que**
- ledit réacteur monobloc (15) comprend une unité de traitement (12),
- ladite unité de traitement (12) des signaux de l'unité sensible est localisée à proximité immédiate de l'unité sensible (30) propre à être fixée sur ledit réacteur monobloc (15), ladite chambre étant formée dans une plaque système (17) qui présente une première face (29), accolée à une cellule d'extrémité dudit empilage, dans laquelle ladite tubulure (24) débouche au sortir de l'empilage de cellules qu'elle traverse, et une deuxième face (19) opposée à la première qui forme un support pour la fixation d'un ou plusieurs éléments dudit circuit de gaz à l'extérieur dudit corps (15),
ledit capteur de composition (11) étant monté dans une paroi (27) de ladite plaque système (17) comportant du côté interne de ladite paroi (27) un embout creux (31) enfermant une cavité (36) qui est en communication avec l'atmosphère de ladite chambre (20) et dans laquelle est logée ladite unité (30, 32) sensible à la concentration in situ d'un composant du gaz dans la chambre (20),
le réacteur étant **caractérisé en ce que** la cavité (36) logeant l'unité sensible (30, 32) dans ledit embout creux (31) est séparée par un cloisonnement (75) étanche aux gaz et aux liquides d'une autre chambre formée dans une partie (48) du capteur montée du côté externe de ladite paroi (27) par rapport à la dite chambre (20) dans laquelle est montée l'unité de traitement (12) traversé de façon étanche et résistant à une pression différentielle entre la cavité (36) et ladite autre chambre dudit capteur (11) par des conducteurs (46) issus de l'unité sensible (30, 32).

## Patentansprüche

1. Elektrochemischer Reaktor, wie etwa eine Brennstoffzelle oder ein Elektrolysator, welcher aufweist: einen Stapel (22) von elektrochemischen Zellen (25), von denen jede wenigstens eine Elektrodenplatte (108-1) umfasst, die eine mit einem Elektrolyten in elektrischem Kontakt stehende Seite besitzt; wenigstens einen Rohrstutzen (24), der mit dieser Seite jeder der Zellen in einem Kreislauf zum Austausch eines Gases mit der Außenseite des Stapels verbunden ist; einen Sensor (11), der für die Zusammensetzung des Gases in dem Kreislauf empfindlich ist; und wenigstens ein Organ zur Überwachung eines Zustands des Reaktors, insbesondere unter der Kontrolle des Sensors, wobei dieser Reaktor derart beschaffen ist, dass der Stapel von Zellen und der Rohrstutzen einen einstückigen Reaktorkörper (15) bilden, welcher wenigstens eine in diesen Körper integrierte Kammer (20) aufweist, die mit dem Rohrstutzen in Verbindung steht, und derart, dass der Sensor für die Zusammensetzung des Gases (11) in dem einstückigen Körper angebracht ist und eine empfindliche Einheit (30) umfasst, die unmittelbar der in-situ-Konzentration einer Komponente des Gases in der Kammer (20) ausgesetzt ist, wobei dieser Reaktor **dadurch gekennzeichnet ist, dass**
- der einstückige Reaktor (15) eine Verarbeitungseinheit (12) aufweist,
- diese Einheit zur Verarbeitung (12) der Signale der empfindlichen Einheit in unmittelbarer Nähe der empfindlichen Einheit (30) angeordnet ist, die dafür eingerichtet ist, an dem einstückigen Reaktor (15) befestigt zu werden,
wobei die Kammer in einer Systemplatte (17) ausgebildet ist, welche eine an eine Endzelle des Stapels angefügte erste Seite (29) aufweist, in welcher der Rohrstutzen (24) beim Austritt aus dem Zellenstapel, den er durchquert, mündet, und eine zweite Seite (19), die der ersten gegenüberliegt und die eine Halterung für die Befestigung eines oder mehrerer Elemente des Gaskreislaufs an der Außenseite des Körpers (15) bildet,
wobei der Zusammensetzungssensor (11) in einer Wand (27) der Systemplatte (17) angebracht ist und auf der Innenseite der Wand (27) ein hohles Endstück (31) aufweist, das einen Hohlraum (36) umschließt, welcher mit der Atmosphäre der Kammer (20) in Verbindung steht und in welchem die Einheit (30, 32) aufgenommen ist, die für die in-situ-Konzentration einer Komponente des Gases in der Kammer (20) empfindlich ist,
wobei der Reaktor **dadurch gekennzeichnet ist, dass** der die empfindliche Einheit (30, 32) aufnehmende Hohlraum (36) in dem hohlen Endstück (31) von einer anderen Kammer, die in einem auf der in Bezug auf die Kammer (20) äußeren Seite der Wand (27) angebrachten Teil (48) des Sensors ausgebildet ist und in welcher die Verarbeitungseinheit (12) angebracht ist, durch eine gasdichte und flüssigkeitsdichte Abschottung (75) getrennt ist, die auf eine dichte und gegenüber einem Differenzdruck zwischen dem Hohlraum (36) und der anderen Kammer des Sensors (11) beständige Weise von Leitern (46) durchquert wird, die von der empfindlichen Einheit (30, 32) ausgehen.

## Claims

1. Electrochemical reactor, such as a fuel cell stack or an electrolyser, comprising: a stack (22) of electrochemical cells (25), each of which comprises at least one electrode plate (108-1) having one face in electrical contact with an electrolyte; at least one manifold (24) connected to said face of each of the cells in an exchange circuit, for exchanging a gas with the outside of the stack; a sensor (11) sensitive to the composition of said gas in the circuit; and at least one means for monitoring a condition of the reactor, especially under the control of said sensor, this reactor being such that the stack of cells and said duct form a one-piece reactor body (15) which comprises at least one chamber (20) integrated into this body in communication with said manifold and such that said gas composition sensor (11) is mounted in said one-piece body and comprises a sensitive unit (30) directly exposed to the *in situ* concentration of a component of said gas in said chamber (20), this reactor being **characterized in that**
- said one-piece reactor (15) comprising a processing unit (12),
- said processing unit (12) for processing the signals from the sensitive unit is located in the immediate proximity of the sensitive unit (30) suitable for being fixed to said one-piece reactor (15),
said chamber being formed in a system plate (17) that has a first face (29), in juxtaposition with an end cell of said stack, into which face said manifold (24) opens on leaving the stack of cells through which it passes, and a second face (19), opposite the first face, which forms a support for fixing one or more elements of said gas circuit to the outside of said body (15),
said composition sensor (11) being mounted in a wall (27) of said system plate (17) including, on the internal side of said wall (27), a hollow end piece (31) enclosing a cavity (36) which communicates with the atmosphere of said chamber (20) and in which said unit (30, 32) sensitive to the *in situ* concentration of a component of the gas in the chamber (20) is housed,
the reactor being **characterized in that** the cavity (36) housing the sensitive unit (30, 32) in said hollow end piece (31) is separated by a gas-tight and liquid-tight partition (75) from another chamber formed in a portion (48) of the sensor, which portion is mounted on the external side of said wall (27) relative to said chamber (20) in which the processing unit (12) is mounted, which partition (75) is sealingly penetrated by conductors (46) coming from the sensitive unit (30, 32) and is resistant to a differential pressure between the cavity (36) and said other chamber of said sensor (11).
